# EUROPÄISCHE PATENTSCHRIFT

(11) **EP 2 921 678 B1**
(45) Veröffentlichungstag und Bekanntmachung des Hinweises auf die Patenterteilung: **21.08.2024**
(21) Anmeldenummer: 15000122.0
(22) Anmeldetag: 17.01.2015
(51) Int. Cl.: F02D 41/18, F02D 19/02, F02D 41/00, F02B 29/04, F02M 21/02, F02M 26/05, F02M 26/23, F02M 35/10, F02M 21/04

(54) **Brennkraftmaschine, insbesondere Gasmotor, für ein Kraftfahrzeug**
Combustion engine, in particular gas engine, for a motor vehicle
Moteur à combustion interne, notamment moteur à gaz, pour un véhicule automobile

(30) Priorität: 12.03.2014 DE 102014003276
(43) Veröffentlichungstag der Anmeldung: 23.09.2015
(73) Patentinhaber: MAN Truck & Bus SE, 80995 München (DE)
(72) Erfinder: Prümm, Franz Werner, 90482 Nürnberg (DE); Barciela, Bruno, 90489 Nürnberg (DE); Weiß, Joachim, 90522 Oberasbach (DE)
(74) Vertreter: Liebl, Thomas

(56) Entgegenhaltungen:
- EP-A2- 1 662 127
- DE-A1- 102007 010 501
- DE-A1- 102013 213 351
- US-A1- 2014 034 026

## Beschreibung

Die Erfindung betrifft eine Brennkraftmaschine welche als Gasmotor ausgebildet ist für ein Kraftfahrzeug nach Anspruch 1 sowie ein Verfahren zum Betreiben einer Brennkraftmaschine nach Anspruch 7.

Es ist allgemein bekannt, zur Verbesserung des Wirkungsgrades einer Brennkraftmaschine, insbesondere eines Gasmotors eine gekühlte und geregelte Abgasrückführung (AGR) zu verwenden. Das rückgeführte Abgas wirkt als Zugabe von Inertgas zum Gasgemisch einer Klopfneigung entgegen, so dass damit eine Erhöhung des Verdichtungsverhältnisses und damit eine Wirkungsgradverbesserung möglich ist. Zusätzlich erfolgt bei der Anwendung einer Abgasrückführung eine Wirkungsgradsteigerung im Teil- und Schwachlastbereich durch Absenkung der Ladungswechselverluste.

Für den Betrieb einer Brennkraftmaschine wird in an sich bekannter Weise je nach Leistungsanforderung Kraftstoff zum zugeordneten Luftmassenstrom zudosiert. Für eine vorgegebene Zudosierung von Kraftstoff ist eine möglichst genaue Bestimmung des jeweiligen Luftmassenstroms erforderlich:
Es ist bekannt, bei Brennkraftmaschinen ohne Abgasrückführung den Luftmassenstrom durch eine Messung des Manifold Absolute Pressure (MAP) entsprechend einem Saugrohrdruck zu bestimmen. Dabei wird über ein Modell, welches das Schluckvermögen des Motors in Abhängigkeit der Drehzahl (Liefergradmodell) widerspiegelt die Zylinderfüllung berechnet. Aus der Zylinderfüllung wird wiederum unter Berücksichtigung der Motordrehzahl der Luftmassenstrom des gesamten Motors berechnet. Diese Vorgehensweise ist jedoch bei Brennkraftmaschinen mit Abgasrückführung, insbesondere bei Gasmotoren mit einer Abgasrückführung nicht möglich, da diese in der vorstehenden Berechnung nicht berücksichtigt wird.

Es ist auch bereits eine Bestimmung des Luftmassenstroms bekannt, welche bei Brennkraftmaschinen, insbesondere bei Gasmotoren mit Abgasrückführung (AGR) verwendet wird. Dabei wird der Luftmassenstrom in der Luftmassenstromzuführung vor der Zumischung des Kraftstoffs und vor Zumischung des rückgeführten Abgases direkt mit Hilfe eines speziellen Luftmassenmessers gemessen. Dazu ist ein Heißfilmluftmassenmesser (HFM) bekannt. Ein solcher Heißfilmluftmassenmesser ist teuer und kann störanfällig sein. Insbesondere hat sich ein HFM bei Erdgasmotoren (EURO V) aufgrund seiner Schmutzempfindlichkeit als sehr störanfällig erwiesen.

Aus der DE 10 2007 010 501 A1 ist ein Verfahren zur Bestimmung einer Abgasrückführmasse bekannt.

Die EP 1 662 127 A2 und die US 2014/034026A1 beschreiben jeweils eine Vorrichtung zur Abschätzung einer Ansaugluftmenge einer Brennkraftmaschine.

Die DE 10 2013 213 351 A1 zeigt ein Verfahren zum Betrieb einer Gas-Brennkraftmaschine.

Aufgabe der Erfindung ist es, eine Brennkraftmaschine welche als Gasmotor ausgebildet ist, sowie ein Verfahren zum Betreiben einer derartigen Brennkraftmaschine mit einem Ladeluftkühler vorzuschlagen, mit der bzw. mit dem eine alternative, kostengünstige und funktionssichere Bestimmung des Luftmassenstroms möglich ist.

Diese Aufgabe wird gelöst mit den Merkmalen der unabhängigen Ansprüche.

Bevorzugte Ausgestaltungen sind Gegenstand der darauf rückbezogenen Unteransprüche.

Gemäß Anspruch 1 wird eine Brennkraftmaschine welche als Gasmotor ausgebildet ist für ein Kraftfahrzeug vorgeschlagen, die einen in einer Luftmassenstromzuführung stromauf einer Vorrichtung zur Kraftstoffzumischung angeordneten Ladeluftkühler sowie eine Messeinrichtung zur Bestimmung des Luftmassenstroms aufweist.

Erfindungsgemäß ist vorgesehen, dass eine Messeinrichtung eine Sensorik zur Messung eines Druckverlusts über dem Ladeluftkühler aufweist. Die Messeinrichtung umfasst weiter eine Recheneinheit als Auswerteeinheit, mit der in einem dort abgelegten Ladeluftkühlermodell, in dem der Ladeluftkühler eine geometrisch konstante Drossel für den durchströmenden Luftmassenstrom bildet, wenigstens aus dem mittels der Sensorik gemessenen Druckverlust der Luftmassenstrom berechenbar ist bzw. berechnet wird.

Bei einem auf ein bestimmtes Bauteil bezogenen Modell, zum Beispiel dem vorstehend genannten Ladeluftkühlermodell bzw. dem nachstehend noch genannten Drosselklappenmodell, handelt es sich vorliegend stets um eine in einer Rechnereinheit abgelegte, dieses Bauteil beschreibende mathematische Funktion und/oder Kennlinien bzw. Kennfelder, mit dem eine Prozessgröße in Abhängigkeit von definiert vorgegebenen Eingangssignalen berechnet wird.

Bezogen auf das Ladeluftkühlermodell bedeutet dies, dass der Ladeluftkühler hier eine von einem Luftmassenstrom durchströmte geometrisch konstante Drossel ist, für die wenigstens aus dem mittels der Sensorik gemessenen Druckverlust als Eingangsgröße der Luftmassenstrom berechenbar ist. Neben dem Druckverlust können selbstverständlich auch noch weitere Parameter bzw. Eingangsgrößen berücksichtigt werden, zum Beispiel Motorparameter, AGR-Parameter oder dergleichen. Eine geometrisch konstante Drossel ist hierbei eine Drossel mit einer Geometrie, bei der der Druckverlust im Wesentlichen linear zu dem die Drossel durchströmenden Massenstrom ist.

Die Erfindung nutzt somit den physikalischen Effekt des Druckverlusts einer Drosselung in einem Gasstrom. Ein solcher Druckverlust ist, wie erfinderseitige Versuche gezeigt haben, annähernd linear zum Massenstrom, der durch die Drossel fließt. Konkret ist es für die vorliegende Bestimmung des Luftmassenstroms somit erforderlich, die Ladeluftkühler-Drosselcharakteristik als Grundlage für die Berechnung vorab durch Messungen zu bestimmen.

Vorteilhaft kann mit der erfindungsgemäßen Bestimmung des Luftmassenstroms damit ein teurer und störanfälliger Heißfilmluftmassenmesser (HFM) entfallen.

Die Sensorik zur Messung des Druckverlusts am Ladeluftkühler kann durch jeweils einen Drucksensor stromauf und stromab des Ladeluftkühlers oder alternativ durch einen Differenzdrucksensor gebildet werden. Zusätzlich kann auch wenigstens ein Temperatursensor zur Messung der Temperatur des Luftmassenstroms verwendet werden, wobei dann die Temperatur gegebenenfalls bei der Berechnung zur Steigerung der Genauigkeit mit berücksichtigt werden kann.

Üblicherweise wird bei einer Brennkraftmaschine welche als Gasmotor ausgebildet ist die Lastanforderung mittels einer verstellbaren Drosselklappe in der Luftmassenstromzuführung vorgegeben, welche damit als variable Drossel wirkt. Somit kann in einem Drosselklappenmodell, in dem die Drosselklappe als eine vom Luftmassenstrom durchströmte geometrisch veränderliche Drossel definiert ist, der Luftmassenstrom auch anhand des mittels einer Sensorik gemessenen Druckverlusts über der Drosselklappe und der mittels der Sensorik erfassten Drosselklappenstellung bestimmt werden. Im Schwachund unterem Teillastbereich ist die Drosselwirkung durch die Drosselklappe für die Ausbildung gut messbarer Druckunterschiede und damit für eine genaue Luftmassenbestimmung ausreichend hoch. Im volllastnahen Bereich bei weitgehend offener Drosselklappe sind diese messbaren Druckunterschiede jedoch so gering, dass damit eine zur Kraftstoff-Zudosierung ausreichend genaue Luftmassenbestimmung aufgrund der flachen Kennlinie in diesem Bereich nicht mehr befriedigend möglich ist.

Das Drosselklappenmodell ist somit ein Modell, bei dem die Drosselklappe als eine von einem Luftmassenstrom durchströmte geometrisch veränderliche Drossel angenommen wird, für die wenigstens aus dem mittels der Sensorik gemessenen Druckverlust und der mittels der Sensorik gemessenen Drosselklappenstellung als Eingangsgrößen der Luftmassenstrom berechenbar ist.

Erfindungsgemäß wird daher vorgeschlagen, dass im Schwachlastbereich der Luftmassenstrom mittels des Drosselklappenmodells und in hohen Lastbereichen mittels des Ladeluftkühlermodells bestimmt wird. Im dem wenigstens einen dazwischenliegenden mittleren Lastbereich ergeben beide Möglichkeiten ausreichend gute Ergebnisse und können somit alternativ oder gegebenenfalls parallel für einen kontinuierlichen Abgleich, gegebenenfalls in Verbindung mit einer Lambda-Regelung, verwendet werden.

Die erfindungsgemäße Erfassung des Luftmassenstroms ist vorteilhaft bei einer Brennkraftmaschine welche als Gasmotor ausgebildet ist die eine Abgasrückführung (AGR) in die Luftmassenstromzuführung, vorzugsweise in die Luftmassenstromzuführung stromab des Ladeluftkühlers, aufweist. Besonders bevorzugt ist diese Abgasrückführung hierbei eine geregelte und/oder gekühlte Abgasrückführung, wobei dann der Anteil des rückgeführten Abgases als AGR-Rate bzw. AGR-Istwert mittels der Recheneinheit berechnet wird. Dazu wird der Gesamtmassenstrom aus Frischluft, Brenngas und rückgeführtem Abgas durch Messung des Saugrohrdrucks (Manifold Absolute Pressure) mit einem MAP-Sensor in einem Liefergradmodell bestimmt. Vom Gesamtmassenstrom wird der ermittelte und damit bekannte Luftmassenstrom sowie der Brenngasmassenstrom abgezogen. Der Brenngasmassenstrom kann über eine jeweils bekannte Einblasdauer von Injektoren und/oder über ein jeweils bekanntes Verbrennungsluftverhältnis aus einer Lambdamessung mittels Lambdasonde bestimmt werden. Die dann verbleibende Differenz ergibt den Anteil des aktuell rückgeführten Abgases als AGR-Rate bzw. als AGR-Istwert.

Diese Berechnung der AGR-Rate bzw. der AGR-Istwerts kann dann in einem Regelkreis auf vorgegebene AGR-Sollwerte geregelt werden. Ein solcher AGR-Regler kann ebenso wie die vorstehende Recheneinheit in einem Motorsteuergerät integriert sein, wobei die AGR-Sollwerte in einem Kennfeld abgelegt sein können.

Da sich eine Luftmassenstrommessung mit einem HFM-Sensor besonders bei Gasmotoren als sehr störanfällig erwiesen hat, kann die alternative, erfindungsgemäße Bestimmung des Luftmassenstroms ohne HFM-Sensor besonders vorteilhaft bei Gasmotoren verwendet werden.

Die sich mit dem erfindungsgemäßen Verfahren und dem ebenfalls beanspruchten Fahrzeug ergebenden Vorteile sind identisch mit den zuvor zur Brennkraftmaschine genannten Vorteilen, so dass zur Vermeidung von Wiederholungen auf die vorstehenden Ausführungen verwiesen wird.

Anhand einer Zeichnung wird ein Ausführungsbeispiel der Erfindung lediglich schematisch und beispielhaft näher erläutert.

Es zeigen:
- Fig. 1: eine Schemadarstellung eines Erdgasmotors mit geregelter und gekühlter Abgasrückführung, und
- Fig. 2: eine konkretere Darstellung entsprechend Fig. 1.

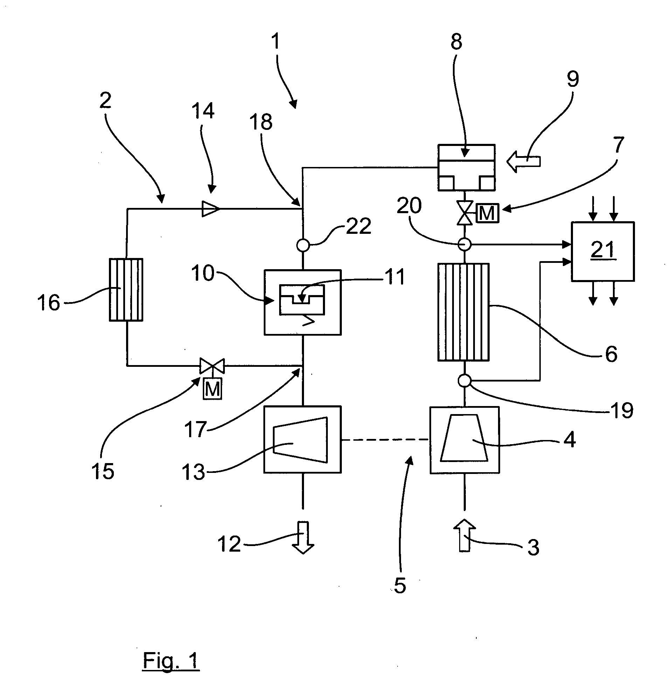

In Fig. 1 ist eine Schemadarstellung einer Brennkraftmaschine als Erdgasmotor 1 mit einer geregelten und gekühlten Abgasrückführung 2 dargestellt:
Ein Luftmassenstrom (Pfeil 3) wird mittels eines Verdichters 4, der Bestandteil eines Abgasturboladers 5 ist, durch einen Ladeluftkühler 6 geleitet. Von dort wird der gekühlte Luftmassenstrom 3 über eine steuerbare Drosselklappe 7 einem Gasmischer 8 zugeführt, dem weiter ein Gasmassenstrom (Pfeil 9) zugeführt wird. Von dort strömt das Gasgemisch zum Saugrohr des Motorblocks 10 mit seinen Zylinder-Kolben-Einheiten 11, in denen der Verbrennungsprozess stattfindet. Von dort strömt ein Abgasmassenstrom (Pfeil 12) über eine Turbine 13 des Abgasturboladers 5, wobei die Turbine 13 mechanisch mit dem Verdichter 4 gekoppelt ist und diesen antreibt.

Stromauf der Turbine 13 wird an einer Verzweigungsstelle 17 ein Abgasrückführ-Massenstrom (AGR-Massenstrom) entsprechend 14 abgezweigt und über ein AGR-Regelventil 15 und einen AGR-Kühler 16 an einer Verzweigungsstelle 18 dem Gasmassenstrom stromab des Gasmischers 8 sowie stromauf des Motorblocks 10 zugeführt.

Zur Messung eines Druckverlustes über dem Ladeluftkühler 6 sind hier ein Drucksensor 19 stromauf des Ladeluftkühlers 6 (p-vLLK-Sensor) und weiter, stromab des Ladeluftkühlers 6, ein Drucksensor 20 (p-nLLK-Sensor) im Luftmassenstrom 3 angeordnet. Die Messsignale der Drucksensoren 19, 20 entsprechend einem Differenzdruck werden einer Recheneinheit 21 zugeführt, in der daraus die Größe des aktuell angeforderten Luftmassenstroms 3 berechnet wird.

Stromauf des Motorblocks 10 und stromab der Verzweigungsstelle 18 ist ein Drucksensor 22, bevorzugt als MAP-Saugrohrdrucksensor, zur Messung des Saugrohrdrucks angeordnet, mit dem in einem Liefergradmodell der Gesamtmassenstrom aus Frischluft, Brenngas und rückgeführtem Abgas zum Beispiel in der Recheneinheit 21 bestimmt werden kann. Von diesem Gesamtmassenstrom kann der ermittelte Luftmassenstrom 3, der mittels der Drucksensoren 19, 20 über den Druckabfall am Ladeluftkühler 6 berechnet wurde, abgezogen werden. Weiter kann der Gasmassenstrom 9 über eine jeweils bekannte Einblasdauer von Injektoren und/oder über ein jeweils bekanntes Verbrennungsluftverhältnis ermittelt und ebenfalls vom Gesamtmassenstrom abgezogen werden, so dass dann die verbleibende Differenz den Anteil des aktuell rückgeführten Abgases als AGR-Massenstrom entsprechend einer AGR-Rate bzw. einem AGR-Istwert ergibt. Dieser AGR-Istwert wird somit ohne seine direkte Messung berechnet.

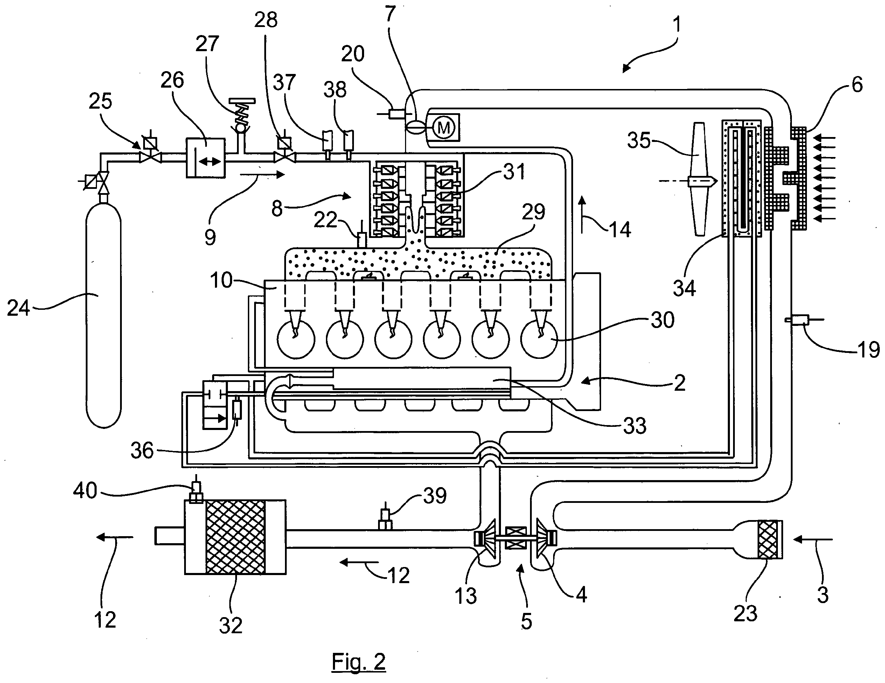

In Fig. 2 ist der Erdgasmotor 1 von Fig. 1 in einer mehr konkretisierten Darstellung mit weiteren Einzelheiten dargestellt, wobei gleiche Bauteile aus Fig. 1 mit gleichen Bezugszeichen gekennzeichnet sind.

Ersichtlich ist auch hier ein Luftmassenstrom (Pfeil 3) über einen Luftfilter 23 dem Verdichter 4 des Abgasturboladers 5 zugeführt und wird von dort über den Ladeluftkühler 6 und die Drosselklappe 7 dem Gasmischer 8 zugeführt. Dem Gasmischer 8 wird zudem aus einem Hochdruckspeicher 24 für komprimiertes Erdgas (CNG-Hochdruckspeicher für Compressed Natural Gas) über ein Hochdruck-Absperrventil 25, einen Gasdruckregler 26 in Verbindung mit einem Überdruckventil 27 und einem Niederdruck-Absperrventil 28 der Gasmassenstrom 9 zugeführt. Der Gasmischer 8 ist mit einem Saugrohr 29 am Motorblock 10 verbunden, wobei vom Saugrohr 29 jeweils Verbindungsleitungen zu den hier lediglich beispielhaft sechs Zylinder-Kolben-Einheiten 30 abgehen. Zur Zudosierung des Gasmassenstroms 9 sind im Gasmischer 8 Einblasventile 31 vorgesehen.

Der Abgasmassenstrom (Pfeil 12) wird auch hier über die Turbine 13 des Abgasturboladers 5 und über einen nachgeordneten Katalysator, z.B. einen 3-Wege-Katalysator 32, mit Schalldämpfer geführt. Auch hier wird vom Abgasstrom ein AGR-Massenstrom 14 abgezweigt und über eine gekühlte Abgasrückführeinheit 33 zwischen der Drosselklappe 7 und dem Gasmischer 8 zurückgeführt. Die Kühlung des AGR-Massenstroms 14 erfolgt hier indirekt über ein Kühlmittel, welches in einem Wasserkühler 34, der hier in kompakter Weise zwischen dem Ladeluftkühler 6 und einem weiter zugeordneten Lüfter 35 angeordnet ist, auf eine vorgegebene, mittels eines Kühlmittel-Temperatursensors 36 erfasste Temperatur gekühlt wird. Der Lüfter 35, der diesem zugeordnete Wasserkühler 34 sowie der diesen zugeordnete Ladeluftkühler 6 können dabei zu einer Baueinheit zusammengefasst sein oder aber auch durch einander lediglich zugeordnete separate Bauteile gebildet sein.

Weiter sind der p-vLLK-Sensor 19 und der p-nLLK-Sensor 20 im Luftmassenstrom 3 angeordnet, wobei beide Sensoren 19, 20 bevorzugt weiter mit einem Temperatursensor ausgerüstet sind.

Am Saugrohr 29 ist zudem der MAP-Saugrohrdrucksensor 22 angebracht. Stromauf des Gasmischers 8 sind in der Gasleitung für den Gasmassenstrom 9 ein CNG-Drucksensor 37 und ein CNG-Temperatursensor 38 angeordnet.

Stromauf des Katalysators 32 sind im Abgasmassenstrom 12 hier zudem beispielhaft eine Breitbandlambdasonde 39 und stromab des Katalysators 32 eine Lambdasprungsonde 40 angeordnet.

Auch in der konkreter dargestellten Ausführungsform eines Erdgasmotors 1 nach Fig. 2 wird der jeweils aktuell angeforderte Luftmassenstrom 3 über eine Druckverlustmessung mittels der Drucksensoren 19, 20 über dem Ladeluftkühler 6 gegebenenfalls in Verbindung mit einem (nicht dargestellten) Drosselklappenmodell bestimmt. Der daraus gewonnene Wert kann insbesondere für eine AGR-Regelung herangezogen werden.

### Bezugszeichenliste

- 1: Erdgasmotor
- 2: Abgasrückführung
- 3: Pfeil (Luftmassenstrom)
- 4: Verdichter
- 5: Abgasturbolader
- 6: Ladeluftkühler
- 7: Drosselklappe
- 8: Gasmischer
- 9: Pfeil (Gasmassenstrom)
- 10: Motorblock
- 11: Zylinder-Kolben-Einheit
- 12: Pfeil (Abgasmassenstrom
- 13: Turbine
- 14: AGR-Massenstrom
- 15: AGR-Regelventil
- 16: AGR-Kühler
- 17: Verzweigungsstelle
- 18: Verzweigungsstelle
- 19: p-vLLK-Sensor
- 20: p-nLLK-Sensor
- 21: Recheneinheit
- 22: MAP-Saugrohrdrucksensor
- 23: Luftfilter
- 24: Hochdruckspeicher
- 25: Hochdruck-Absperrventil
- 26: Gasdruckregler
- 27: Überdruckventil
- 28: Niederdruck-Absperrventil
- 29: Saugrohr
- 30: Zylinder-Kolben-Einheit
- 31: Einblasventil
- 32: 3-Wege-Katalysator
- 33: Abgasrückführeinheit
- 24: Wasserkühler
- 35: Lüfter
- 36: Kühlmittel-Temperatursensor
- 37: CNG-Drucksensor
- 38: CNG-Temperatursensor
- 39: Breitbandlambdasonde
- 40: Lambdasprungsonde

## Patentansprüche

1. Brennkraftmaschine, als Gasmotor ausgebildet, für ein Kraftfahrzeug,
mit einem in einer Luftmassenstromzuführung stromauf einer Vorrichtung zur Kraftstoffzumischung (8) angeordneten Ladeluftkühler (6), und
mit einer Messeinrichtung zur Bestimmung des Luftmassenstroms (3), wobei die Messeinrichtung eine Sensorik (19, 20) zur Messung eines Druckverlustes über dem Ladeluftkühler (6) aufweist,
wobei die Messeinrichtung weiter eine Recheneinheit (21) als Auswerteeinheit aufweist, mit der in einem dort abgelegten Ladeluftkühlermodell, in dem der Ladeluftkühler (6) eine geometrisch konstante Drossel für den durchströmenden Luftmassenstrom (3) bildet, wenigstens aus dem mittels der Sensorik (19, 20) gemessenen Druckverlust der Luftmassenstrom (3) berechenbar ist,
wobei die Messeinrichtung eine Sensorik zur Messung eines Druckverlustes über einer Drosselklappe (7) und zur Messung einer Drosselklappenstellung aufweist, wobei die Drosselklappe (7) in einem in der Recheneinheit (21) abgelegten Drosselklappenmodell eine geometrisch veränderliche Drossel für den durchströmenden Luftmassenstrom (3) bildet, so dass mittels der Recheneinheit (21) wenigstens aus dem jeweiligen Druckverlust an der Drosselklappe (7) und der Drosselklappenstellung der Luftmassenstrom (3) berechenbar ist, und
wobei die Messeinrichtung so ausgebildet ist, dass im Schwachlastbereich der Brennkraftmaschine (1) die Bestimmung des Luftmassenstroms (3) mittels des Drosselklappenmodells, und im hohen Lastbereich mittels des Ladeluftkühlermodells durchführbar ist, **dadurch gekennzeichnet,**
**dass** in wenigstens einem dazwischen liegenden mittleren Lastbereich die Bestimmung des Luftmassenstroms (3) mittels des Drosselklappenmodells und des Ladeluftkühlermodells erfolgt und ein kontinuierlicher Abgleich der Ergebnisse beider Modelle, gegebenenfalls in Verbindung mit einer Lambda-Regelung, durchführbar ist.

2. Brennkraftmaschine nach Anspruch 1, **dadurch gekennzeichnet, dass** die Sensorik zur Messung des Druckverlustes am Ladeluftkühler (6) einen Drucksensor (19) stromauf des Ladeluft-Kühlers (p-vLLK-Sensor) und einen Drucksensor (20) stromab des Ladeluftkühlers (p-nLLK-Sensor) aufweist, oder dass die Sensorik durch einen Differenzdrucksensor gebildet ist, wobei bevorzugt vorgesehen ist, dass die Sensorik zusätzlich einen Temperatursensor zur Messung der Temperatur des Luftmassenstroms (3) aufweist.

3. Brennkraftmaschine nach einem der vorhergehenden Ansprüche, **dadurch gekennzeichnet, dass** die Brennkraftmaschine (1) eine Abgasrückführung (AGR) (2) in die Luftmassenstromzuführung aufweist, vorzugsweise stromab des Ladeluftkühlers (6).

4. Brennkraftmaschine nach Anspruch 3, **dadurch gekennzeichnet, dass** die Abgasrückführung (2) eine geregelte und/oder gekühlte Abgasrückführung (2) ist, wobei der Anteil (14) des rückgeführten Abgases (AGR-Rate als AGR-Istwert) mittels der Recheneinheit (21) berechenbar ist, insbesondere dergestalt, dass dazu der Gesamtmassenstrom aus Frischluft, Brenngas und rückgeführtem Abgas durch Messung (22) des Saugrohrdrucks in einem Liefergradmodell bestimmt wird,
dass weiter vom Gesamtmassenstrom der ermittelte bekannte Luftmassenstrom (3) sowie der Brenngasmassenstrom (9) abgezogen werden, wobei der Brenngasmassenstrom (9) über eine jeweils bekannte Einblasdauer von Injektoren und/oder über ein jeweils bekanntes Verbrennungsluftverhältnis aus einer Lambdamessung mittels Lambdasonde (39, 40) bestimmt wird, und dass weiter die verbleibende Differenz den Anteil (14) des aktuell rückgeführten Abgases als AGR-Rate entsprechend einem AGR-Istwert ergibt.

5. Brennkraftmaschine nach Anspruch 4, **dadurch gekennzeichnet, dass** eine AGR-Rate (14) und/oder ein AGR-Istwert in einem Regelkreis auf vorgegebene AGR-Sollwerte regelbar ist oder sind, wobei bevorzugt vorgesehen ist, dass ein AGR-Regler, gegebenenfalls auch die Recheneinheit (21), in ein Motorsteuergerät integriert ist oder sind, und die AGR-Sollwerte in einem Kennfeld abgelegt sind.

6. Brennkraftmaschine nach einem der vorhergehenden Ansprüche, **dadurch gekennzeichnet, dass** die Brennkraftmaschine ein mit Erdgas betriebener Gasmotor ist.

7. Verfahren zum Betreiben einer als Gasmotor ausgebildeten Brennkraftmaschine für ein Kraftfahrzeug, nach einem der vorhergehenden Ansprüche,
bei dem in einer Luftmassenstromzuführung stromauf einer Vorrichtung zur Kraftstoffzumischung (8) ein Ladeluftkühler (6) angeordnet ist, und bei dem eine Messeinrichtung zur Bestimmung des Luftmassenstroms (3) vorgesehen ist,
wobei die Messeinrichtung eine Sensorik (19, 20) zur Messung eines Druckverlustes über dem Ladeluftkühler (6) aufweist,
wobei die Messeinrichtung weiter eine Recheneinheit (21) als Auswerteeinheit aufweist, mit der in einem dort abgelegten Ladeluftkühlermodell, in dem der Ladeluftkühler (6) eine geometrisch konstante Drossel für den durchströmenden Luftmassenstrom (3) bildet, aus dem mittels der Sensorik (19, 20) gemessenen Druckverlust der Luftmassenstrom (3) berechnet wird,
wobei die Messeinrichtung eine Sensorik zur Messung eines Druckverlustes über einer Drosselklappe (7) und zur Messung einer Drosselklappenstellung aufweist, wobei die Drosselklappe (7) in einem in der Recheneinheit (21) abgelegten Drosselklappenmodell eine geometrisch veränderliche Drossel für den durchströmenden Luftmassenstrom (3) bildet, so dass mittels der Recheneinheit (21) wenigstens aus dem jeweiligen Druckverlust an der Drosselklappe (7) und der Drosselklappenstellung der Luftmassenstrom (3) berechnet wird,
wobei im definiert vorgegebenen Schwachlastbereich der Brennkraftmaschine (1) die Bestimmung des Luftmassenstroms (3) mittels des Drosselklappenmodells, und im definiert vorgegebenen hohen Lastbereich mittels des Ladeluftkühlermodells erfolgt, **dadurch gekennzeichnet, dass** in wenigstens einem dazwischen liegenden mittleren Lastbereich die Bestimmung des Luftmassenstroms (3) mittels des Drosselklappenmodells und des Ladeluftkühlermodells erfolgt und ein kontinuierlicher Abgleich der Ergebnisse beider Modelle gegebenenfalls in Verbindung mit einer Lambda-Regelung erfolgt.

8. Verfahren nach Anspruch 7, **dadurch gekennzeichnet,**
**dass** die Brennkraftmaschine (1) eine geregelte und/oder gekühlte Abgasrückführung (2) aufweist, wobei der Anteil (14) des rückgeführten Abgases (AGR-Rate als AGR-Istwert) mittels der Recheneinheit (21) berechnet wird,
**dass** dazu der Gesamtmassenstrom aus Frischluft, Brenngas und rückgeführtem Abgas durch Messung (22) des Saugrohrdrucks in einem Liefergradmodell bestimmt wird,
**dass** vom Gesamtmassenstrom der ermittelte bekannte Luftmassenstrom (3) sowie der Brenngasmassenstrom (9) abgezogen werden, wobei der Brenngasmassenstrom (9) über eine jeweils bekannte Einblasdauer von Injektoren und/oder über ein jeweils bekanntes Verbrennungsluftverhältnis aus einer Lambdamessung mittels Lambdasonde (39, 40) bestimmt wird, und
**dass** die verbleibende Differenz den Anteil (14) des aktuell rückgeführten Abgases als AGR-Rate entsprechend einem AGR-Istwert ergibt.

9. Verfahren nach Anspruch 8, **dadurch gekennzeichnet, dass** eine AGR-Rate (14) und/oder ein AGR-Istwert in einem Regelkreis auf vorgegebene AGR-Sollwerte geregelt wird.

10. Verfahren nach einem der Ansprüche 7 bis 9, **dadurch gekennzeichnet, dass** für das Ladeluftkühlermodell die Luftkühler-Drosselcharakteristik als konstante Charakteristik gemessen wird und für die Berechnung des Luftmassenstroms (3) ein annähernd linearer Zusammenhang zwischen Druckverlust und Massenstrom zugrunde gelegt wird.

11. Fahrzeug, insbesondere Nutzfahrzeug, mit einer Brennkraftmaschine (1) nach einem der vorhergehenden Ansprüche 1 bis 6, insbesondere zur Durchführung eines Verfahrens nach einem der Ansprüche 7 bis 10.

## Claims

1. Internal combustion engine, configured as a gas engine, for a motor vehicle, with an intercooler (6) which is arranged in an air mass flow feed upstream of an apparatus for the addition of fuel (8), and
with a measuring device for determining the air mass flow (3),
the measuring device having a sensor system (19, 20) for measuring a pressure loss across the intercooler (6),
the measuring device having, furthermore, a computing unit (21) as evaluation unit, by way of which, in an intercooler model which is stored there and in which the intercooler (6) forms a geometrically constant throttle for the air mass flow (3) flowing through, can be calculated at least from the pressure loss which is measured by means of the sensor system (19, 20),
the measuring device having a sensor system for measuring a pressure loss across a throttle valve (7) and for measuring a throttle valve position, the throttle valve (7) forming, in a throttle valve model which is stored in the computing unit (21), a geometrically variable throttle for the air mass flow (3) flowing through, with the result that the air mass flow (3) can be calculated by means of the computing unit (21) at least from the respective pressure loss at the throttle valve (7) and the throttle valve position, and
the measuring device being configured in such a way that the determination of the air mass flow (3) can be carried out in the low load range of the internal combustion engine (1) by means of the throttle valve model, and in the high load range by means of the intercooler model, **characterized in that**, in at least a middle load range lying in between, the determination of the air mass flow (3) takes place by means of the throttle valve model and the intercooler model, and a continuous comparison of the results of the two models can be carried out, possibly in conjunction with lambda closed-loop control.

2. Internal combustion engine according to Claim 1, **characterized in that**, for the measurement of the pressure loss at the intercooler (6), the sensor system has a pressure sensor (19) upstream of the intercooler (p-vLLK sensor) and a pressure sensor (20) downstream of the intercooler (p-nLLK sensor), or **in that** the sensor system is formed by way of a differential pressure sensor, it preferably being provided that the sensor system additionally has a temperature sensor for measuring the temperature of the air mass flow (3).

3. Internal combustion engine according to either of the preceding claims, **characterized in that** the internal combustion engine (1) has an exhaust gas recirculation means (EGR) (2) into the air mass flow feed, preferably downstream of the intercooler (6).

4. Internal combustion engine according to Claim 3, **characterized in that** the exhaust gas recirculation means (2) is a closed-loop controlled and/or cooled exhaust gas recirculation means (2), it being possible for the proportion (14) of the recirculated exhaust gas (EGR rate as EGR actual value) to be calculated by means of the computing unit (21), in particular in such a way that, to this end, the total mass flow consisting of fresh air, fuel gas and recirculated exhaust gas is determined by way of measurement (22) of the intake manifold pressure in a volumetric efficiency model,
**in that**, furthermore, the determined known air mass flow (3) and the fuel gas mass flow (9) are subtracted from the total mass flow, the fuel gas mass flow (9) being determined via a respective known injection duration of injectors and/or via a respective known combustion air ratio from a lambda measurement by means of lambda probe (39, 40), and **in that**, furthermore, the remaining difference gives the proportion (14) of the currently recirculated exhaust gas as EGR rate in accordance with an EGR actual value.

5. Internal combustion engine according to Claim 4, **characterized in that** an EGR rate (14) and/or an EGR actual value can be closed-loop controlled in a closed control loop to predetermined EGR setpoint values, it preferably being provided that a closed-loop EGR controller, possibly also the computing unit (21), is or are integrated into an engine control unit, and the EGR setpoint values are stored in a characteristic diagram.

6. Internal combustion engine according to one of the preceding claims, **characterized in that** the internal combustion engine is a gas engine which is operated using natural gas.

7. Method for operating an internal combustion engine which is configured as a gas engine for a motor vehicle, according to one of the preceding claims,
in which method an intercooler (6) is arranged in an air mass flow feed upstream of an apparatus for the addition of fuel (8), and
in which method a measuring device for determining the air mass flow (3) is provided,
the measuring device having a sensor system (19, 20) for measuring a pressure loss across the intercooler (6),
the measuring device having, furthermore, a computing unit (21) as evaluation unit, by way of which, in an intercooler model which is stored there and in which the intercooler (6) forms a geometrically constant throttle for the air mass flow (3) flowing through, the air mass flow (3) is calculated from the pressure loss which is measured by means of the sensor system (19, 20),
the measuring device having a sensor system for measuring a pressure loss across a throttle valve (7) and for measuring a throttle valve position, the throttle valve (7) forming, in a throttle valve model which is stored in the computing unit (21), a geometrically variable throttle for the air mass flow (3) flowing through, with the result that the air mass flow (3) is calculated by means of the computing unit (21) at least from the respective pressure loss at the throttle valve (7) and the throttle valve position,
the determination of the air mass flow (3) taking place in the low load range, predetermined in a defined manner, of the internal combustion engine (1) by means of the throttle valve model, and in the high load range, predetermined in a defined manner, by means of the intercooler model, **characterized in that**, in at least a middle load range lying in between, the determination of the air mass flow (3) takes place by means of the throttle valve model and the intercooler model, and a continuous comparison of the results of the two models takes place, possibly in conjunction with lambda closed-loop control.

8. Method according to Claim 7, **characterized**
**in that** the internal combustion engine (1) has a closed-loop controlled and/or cooled exhaust gas recirculation means (2), the proportion (14) of the recirculated exhaust gas (EGR rate as EGR actual value) being calculated by means of the computing unit (21),
**in that**, to this end, the total mass flow consisting of fresh air, fuel gas and recirculated exhaust gas is determined by way of measurement (22) of the intake manifold pressure in a volumetric efficiency model,
**in that** the determined known air mass flow (3) and the fuel gas mass flow (9) are subtracted from the total mass flow, the fuel gas mass flow (9) being determined via a respective known injection duration of injectors and/or via a respective known combustion air ratio from a lambda measurement by means of lambda probe (39, 40), and
**in that** the remaining difference gives the proportion (14) of the currently recirculated exhaust gas as EGR rate in accordance with an EGR actual value.

9. Method according to Claim 8, **characterized in that** an EGR rate (14) and/or an EGR actual value are/is closed-loop controlled to predetermined EGR setpoint values in a closed control loop.

10. Method according to one of Claims 7 to 9, **characterized in that** the air cooler throttle characteristic is measured as constant characteristic for the intercooler model, and an approximately linear relationship between pressure loss and mass flow is taken as the basis for the calculation of the air mass flow (3).

11. Vehicle, in particular utility vehicle, with an internal combustion engine (1) according to one of the preceding Claims 1 to 6, in particular for carrying out a method according to one of Claims 7 to 10.

## Revendications

1. Moteur à combustion interne, réalisé sous forme de moteur à gaz, pour un véhicule automobile, avec un refroidisseur d'air de suralimentation (6) agencé dans une amenée de flux massique d'air en amont d'un dispositif de mélange de carburant (8), et
avec un appareil de mesure pour déterminer le flux massique d'air (3), l'appareil de mesure présentant un système de détection (19, 20) pour mesurer une perte de pression à travers le refroidisseur d'air de suralimentation (6),
l'appareil de mesure présentant en outre une unité de calcul (21) en tant qu'unité d'évaluation, avec laquelle, dans un modèle de refroidisseur d'air de suralimentation qui y est enregistré, dans lequel le refroidisseur d'air de suralimentation (6) forme un étranglement géométriquement constant pour le flux massique d'air (3) qui le traverse, le flux massique d'air (3) peut être calculé au moins à partir de la perte de pression mesurée au moyen du système de détection (19, 20),
l'appareil de mesure présentant un système de détection pour mesurer une perte de pression à travers un clapet d'étranglement (7) et pour mesurer une position du clapet d'étranglement, le clapet d'étranglement (7) formant, dans un modèle de clapet d'étranglement enregistré dans l'unité de calcul (21), un étranglement géométriquement variable pour le flux massique d'air (3) qui le traverse, de telle sorte qu'au moyen de l'unité de calcul (21), le flux massique d'air (3) peut être calculé au moins à partir de la perte de pression respective au niveau du clapet d'étranglement (7) et de la position du clapet d'étranglement, et
l'appareil de mesure étant réalisé de telle sorte que, dans la plage de faible charge du moteur à combustion interne (1), la détermination du flux massique d'air (3) peut être effectuée au moyen du modèle de clapet d'étranglement, et dans la plage de charge élevée, au moyen du modèle de refroidisseur d'air de suralimentation, **caractérisé en ce que**
dans au moins une plage de charge intermédiaire se situant entre elles, la détermination du flux massique d'air (3) a lieu au moyen du modèle de clapet d'étranglement et du modèle de refroidisseur d'air de suralimentation, et une comparaison continue des résultats des deux modèles peut être effectuée, éventuellement en liaison avec une régulation lambda.

2. Moteur à combustion interne selon la revendication 1, **caractérisé en ce que** le système de détection pour mesurer la perte de pression au niveau du refroidisseur d'air de suralimentation (6) présente un capteur de pression (19) en amont du refroidisseur d'air de suralimentation (capteur p-vLLK) et un capteur de pression (20) en aval du refroidisseur d'air de suralimentation (capteur p-nLLK), ou **en ce que** le système de détection est formé par un capteur de pression différentielle, il étant de préférence prévu que le système de détection présente en plus un capteur de température pour mesurer la température du flux massique d'air (3).

3. Moteur à combustion interne selon l'une quelconque des revendications précédentes, **caractérisé en ce que** le moteur à combustion interne (1) présente un recyclage des gaz d'échappement (RGE) (2) dans l'amenée de flux massique d'air, de préférence en aval du refroidisseur d'air de suralimentation (6).

4. Moteur à combustion interne selon la revendication 3, **caractérisé en ce que** le recyclage des gaz d'échappement (2) est un recyclage des gaz d'échappement (2) régulé et/ou refroidi, la proportion (14) des gaz d'échappement recyclés (taux de RGE en tant que valeur réelle de RGE) pouvant être calculée au moyen de l'unité de calcul (21), notamment de telle sorte qu'à cet effet, le flux massique total d'air frais, de gaz de combustion et de gaz d'échappement recyclés est déterminé par mesure (22) de la pression dans le collecteur d'admission dans un modèle de degré de livraison,
**en ce que** le flux massique d'air (3) connu déterminé ainsi que le flux massique de gaz de combustion (9) sont en outre déduits du flux massique total, le flux massique de gaz de combustion (9) étant déterminé par l'intermédiaire d'une durée d'injection respectivement connue d'injecteurs et/ou par l'intermédiaire d'un rapport d'air de combustion respectivement connu à partir d'une mesure lambda au moyen d'une sonde lambda (39, 40), et **en ce que** la différence restante donne en outre la proportion (14) des gaz d'échappement actuellement recyclés en tant que taux de RGE correspondant à une valeur réelle de RGE.

5. Moteur à combustion interne selon la revendication 4, **caractérisé en ce qu'**un taux de RGE (14) et/ou une valeur réelle de RGE peut ou peuvent être régulés dans un circuit de régulation à des valeurs de consigne de RGE prédéfinies, il étant de préférence prévu qu'un régulateur de RGE, éventuellement également l'unité de calcul (21), est ou sont intégrés dans un équipement de commande du moteur, et les valeurs de consigne de RGE sont enregistrées dans un diagramme caractéristique.

6. Moteur à combustion interne selon l'une quelconque des revendications précédentes, **caractérisé en ce que** le moteur à combustion interne est un moteur à gaz fonctionnant au gaz naturel.

7. Procédé d'exploitation d'un moteur à combustion interne réalisé sous forme de moteur à gaz, pour un véhicule automobile, selon l'une quelconque des revendications précédentes, dans lequel un refroidisseur d'air de suralimentation (6) est agencé dans une amenée de flux massique d'air en amont d'un dispositif de mélange de carburant (8), et dans lequel il est prévu un appareil de mesure pour déterminer le flux massique d'air (3),
l'appareil de mesure présentant un système de détection (19, 20) pour mesurer une perte de pression à travers le refroidisseur d'air de suralimentation (6),
l'appareil de mesure présentant en outre une unité de calcul (21) en tant qu'unité d'évaluation, avec laquelle, dans un modèle de refroidisseur d'air de suralimentation qui y est enregistré dans lequel le refroidisseur d'air de suralimentation (6) forme un étranglement géométriquement constant pour le flux massique d'air (3) qui le traverse, le flux massique d'air (3) est calculé à partir de la perte de pression mesurée au moyen du système de détection (19, 20),
l'appareil de mesure présentant un système de détection pour mesurer une perte de pression à travers un clapet d'étranglement (7) et pour mesurer une position du clapet d'étranglement, le clapet d'étranglement (7) formant, dans un modèle de clapet d'étranglement enregistré dans l'unité de calcul (21), un étranglement géométriquement variable pour le flux massique d'air (3) qui le traverse, de telle sorte que le flux massique d'air (3) est calculé au moyen de l'unité de calcul (21) au moins à partir de la perte de pression respective au niveau du clapet d'étranglement (7) et de la position du clapet d'étranglement,
la détermination du flux massique d'air (3) ayant lieu dans la plage de faible charge prédéfinie du moteur à combustion interne (1) au moyen du modèle de clapet d'étranglement, et dans la plage de charge élevée prédéfinie au moyen du modèle de refroidisseur d'air de suralimentation, **caractérisé en ce que** dans au moins une plage de charge intermédiaire se situant entre elles, la détermination du flux massique d'air (3) a lieu au moyen du modèle de clapet d'étranglement et du modèle de refroidisseur d'air de suralimentation, et une comparaison continue des résultats des deux modèles a lieu, éventuellement en liaison avec une régulation lambda.

8. Procédé selon la revendication 7, **caractérisé en ce que** le moteur à combustion interne (1) présente un recyclage des gaz d'échappement (2) régulé et/ou refroidi, la proportion (14) des gaz d'échappement recyclés (taux de RGE en tant que valeur réelle de RGE) étant calculée au moyen de l'unité de calcul (21),
**en ce qu'**à cet effet, le flux massique total d'air frais, de gaz de combustion et de gaz d'échappement recyclé est déterminé par mesure (22) de la pression dans le collecteur d'admission dans un modèle de degré de livraison,
**en ce que** le flux massique d'air connu déterminé (3) ainsi que le flux massique de gaz de combustion (9) sont déduits du flux massique total, le flux massique de gaz de combustion (9) étant déterminé par l'intermédiaire d'une durée d'injection respectivement connue d'injecteurs et/ou par l'intermédiaire d'un rapport d'air de combustion respectivement connu à partir d'une mesure lambda au moyen d'une sonde lambda (39, 40), et
**en ce que** la différence restante donne la proportion (14) des gaz d'échappement actuellement recyclés en tant que taux de RGE correspondant à une valeur réelle de RGE.

9. Procédé selon la revendication 8, **caractérisé en ce qu'**un taux de RGE (14) et/ou une valeur réelle de RGE sont régulés dans une boucle de régulation à des valeurs de consigne de RGE prédéfinies.

10. Procédé selon l'une quelconque des revendications 7 à 9, **caractérisé en ce que**, pour le modèle de refroidisseur d'air de suralimentation, la caractéristique d'étranglement du refroidisseur d'air est mesurée en tant que caractéristique constante et, pour le calcul du flux massique d'air (3), on se base sur une relation approximativement linéaire entre la perte de pression et le flux massique.

11. Véhicule, notamment véhicule utilitaire, avec un moteur à combustion interne (1) selon l'une quelconque des revendications 1 à 6 précédentes, notamment pour effectuer un procédé selon l'une quelconque des revendications 7 à 10.
